# EUROPÄISCHE PATENTSCHRIFT

(11) **EP 2 786 891 B1**
(45) Veröffentlichungstag und Bekanntmachung des Hinweises auf die Patenterteilung: **26.06.2019**
(21) Anmeldenummer: 13162537.8
(22) Anmeldetag: 05.04.2013
(51) Int. Cl.: B60L 3/00, B60L 3/04

(54) **Schaltungsanordnung, Fahrzeug mit einer Schaltungsanordnung und Verfahren zum Betrieb einer Schaltungsanordnung in einem Fahrzeug**
Circuit arrangement, vehicle with a circuit arrangement and method for operating a circuit arrangement in a vehicle
Dispositif de circuit, véhicule avec dispositif de circuit et procédé de fonctionnement d'un dispositif de circuit dans un véhicule

(43) Veröffentlichungstag der Anmeldung: 08.10.2014
(73) Patentinhaber: Samsung SDI Co., Ltd., Yongin-si, Gyeonggi-do (KR)
(72) Erfinder: Trathnigg, Thomas, 8010 Graz (AT)
(74) Vertreter: Gulde & Partner

(56) Entgegenhaltungen:
- WO-A1-2010/133934
- US-A1- 2003 029 654
- US-A1- 2010 123 989
- US-A1- 2010 127 663

## Beschreibung

Die vorliegende Erfindung betrifft eine Schaltungsanordnung und ein Verfahren zum Erkennen des Durchbrennens einer Schmelzsicherung in einem Batteriesystem, umfassend eine Vielzahl von Zellen, eine Lastschaltung an der die Spannung der Zellen anliegt, einen Stromsensor der der dazu eingerichtet ist den in der Lastschaltung fließenden Strom zu erfassen, eine Elektronikeinheit die dazu eingerichtet ist Signale des Stromsensors auszuwerten, eine der Lastschaltung zuschaltbare Vorladeschaltung die dazu eingerichtet ist den durch die Lastschaltung fließenden Strom mittels eines Widerstands zu begrenzen, eine Trennvorrichtung in einem Abschnitt der Lastschaltung, wobei dieser Abschnitt durch die Vorladeschaltung überbrückbar ist, eine erste Verbraucherschaltung und zumindest eine zweite Verbraucherschaltung, die parallel zueinander angeordnet und mit der Lastschaltung verbunden sind, wobei jeder Verbraucherschaltung zumindest eine Schmelzsicherung zugeordnet ist. Die Erfindung ist anwendbar in einem Fahrzeug mit einem Batteriesystem, wobei der ersten Verbraucherschaltung eine erste Verbraucherkapazität zugeordnet ist, und wobei der zweiten Verbraucherschaltung eine zweite Verbraucherkapazität zugeordnet ist.

Batteriesysteme mit einer Vielzahl von Zellen werden insbesondere als Energiespeicher für den Antrieb von Elektro- und Hybridfahrzeugen eingesetzt. Als Überlastschutz, beispielsweise im Falle eines Kurzschlusses in einem dem Batteriesystem zugeordneten Verbraucher, ist im Stromkreis zwischen Batteriesystem und Verbraucher zumeist eine Schmelzsicherung angeordnet. Erreicht der im Stromkreis zwischen Batteriesystem und Verbraucher fließende Strom einen Grenzwert, so brennt die Schmelzsicherung durch und trennt damit den Stromkreis. Ist die Ursache für den überhöhten Strom behoben, so kann durch Tausch der Schmelzsicherung das Batteriesystem und der dem Batteriesystem zugeordnete Verbraueher wieder in Betrieb genommen werden. Eine Detektion, ob die Schmelzsicherung durchgebrannt ist, erleichtert die Wartung des Fahrzeugs mit einem solchen Batteriesystem.

Aus der Offenlegung JP2010-146773A ist ein Batteriesystem bekannt, in der eine Überwachungsvorrichtung für ein Batterie-Pack angegeben ist, in der das Auslösen einer Sicherung durch Spannungsmessung an zwei Messpunkten innerhalb des Batterie-Packs und Auswertung der Spannungsmessung durch einen Mikrocomputer erkannt wird.

Nachteilig daran ist, dass für die Detektion ob die Sicherung durchgebrannt ist eine eigene Spannungsmessung erforderlich ist. Dies erhöht einerseits den Aufwand in der Montage des Batteriesystems, da zusätzliche Messleitungen notwendig sind. Auch die Komplexität der Überwachungsvorrichtung steigt, da zusätzliche Signale erfasst und in eine geeignete Form gewandelt werden müssen. Dieser Zusatzaufwand vervielfacht sich zudem, wenn dem Batteriesystem mehrere Verbraucher mit einer jeweils eigenen Schmelzsicherung zugeordnet sind.

Die US 2003/029654 A1 beschreibt eine Stromversorgungsvorrichtung für ein Fahrzeug mit einer ersten Batterieeinheit und einer zweiten Batterieeinheit für eine geringere Spannung als die erste Batterieeinheit , eine Invertierschaltung , einen Glättungskondensator , einen Gleichstrom-Gleichstrom-Wandler, eine elektronische Steuereinheit und elektrischen Sicherungen.
Aus der WO 2010/133934 A1 ist ein Elektrofahrzeug mit einer Fahrzeugkarosserie, einer Batterie, einem Ladegerät, elektrischen Sicherungen und einem von dem Ladegerät verschiedenen Hochleistungs- Bauelement bekannt. Die Batterie ist an der Fahrzeugkarosserie angebracht. Das Ladegerät ist an der Fahrzeugkarosserie montiert und wandelt eine ihm zugeführte elektrische Niederspannungsleistung von einer externen Quelle in eine der Batterie zugeführten elektrischen Spannung mit höherer Spannung um. Das Hochleistungs- Bauelement ist an der Fahrzeugkarosserie angebracht, wobei dem Hochleistungs- Bauelement Hochspannung zugeführt wird.
Die US 2010/123989 A1 und die US 2010/127663 beschreiben ebenfalls Batteriesysteme für Fahrzeuge mit elektrischen Sicherungen

Es ist eine Aufgabe der Erfindung, Batteriesysteme der genannten Art sowie Fahrzeuge mit einem solchen Batteriesystem so zu verbessern, dass ein Durchbrennen einer Schmelzsicherung zuverlässig erkannt wird, und dennoch einfach und kostengünstig in der Herstellung ist, sowie ein Verfahren zur Herstellung eines solchen Batteriesystems für ein Fahrzeug anzugeben.

Die Lösung der Aufgabe erfolgt durch eine Schaltungsanordnung zum Erkennen des Durchbrennens einer Schmelzsicherung in einemBatteriesystem, umfassend eine Vielzahl von Zellen, eine Lastschaltung an der die Spannung der Zellen anliegt, einen Stromsensor der der dazu eingerichtet ist den in der Lastschaltung fließenden Strom zu erfassen, eine Elektronikeinheit die dazu eingerichtet ist Signale des Stromsensors auszuwerten, eine der Lastschaltung zuschaltbare Vorladeschaltung die dazu eingerichtet ist den durch die Lastschaltung fließenden Strom mittels eines Widerstands zu begrenzen, eine Trennvorrichtung in einem Abschnitt der Lastschaltung, wobei dieser Abschnitt durch die Vorladeschaltung überbrückbar ist, eine erste Verbraucherschaltung und zumindest eine zweite Verbraucherschaltung, die parallel zueinander angeordnet und mit der Lastschaltung verbunden sind, wobei jeder Verbraucherschaltung zumindest eine Schmelzsicherung zugeordnet ist, wobei die Elektronikeinheit dazu eingerichtet ist, basierend auf Signalen des Stromsensors darauf rückzuschließen ob eine der Schmelzsicherungen durchgebrannt ist.

Die Aufgabe wird auch gelöst durch ein Verfahren zum Erkennen des Durchbrennens einer Schmelzsicherung in einem Batteriesystem in einem Fahrzeug, umfassend eine Vielzahl von Zellen, eine Lastschaltung an der die Spannung der Zellen anliegt, einen Stromsensor der der dazu eingerichtet ist den in der Lastschaltung fließenden Strom zu erfassen, eine Elektronikeinheit die dazu eingerichtet ist Signale des Stromsensors auszuwerten, eine der Lastschaltung zuschaltbare Vorladeschaltung die dazu eingerichtet ist den durch die Lastschaltung fließenden Strom mittels eines Widerstands zu begrenzen, eine Trennvorrichtung in einem Abschnitt der Lastschaltung, wobei dieser Abschnitt durch die Vorladeschaltung überbrückbar ist, eine erste Verbraucherschaltung und zumindest eine zweite Verbraucherschaltung, die parallel zueinander angeordnet und mit der Lastschaltung verbunden sind, wobei jeder Verbraucherschaltung zumindest eine Schmelzsicherung zugeordnet ist,
wobei die Elektronikeinheit den Ist-Stromverlauf des in der Lastschaltung bei einem Vorladevorgang fließenden Stroms, oder die Ist-Ladungsmenge die bei einem Vorladevorgang durch den in der Lastschaltung fließenden Strom umgesetzt wird, erfasst und mit mehreren in der Elektronikeinheit hinterlegten Soll-Stromverläufen oder Soll-Ladungsmengen vergleicht, die je einem bei einem Vorladevorgang in der Lastschaltung fließenden Strom entsprechen oder der bei einem Vorladevorgang umgesetzten Ladungsmenge entsprechen, und dass die Elektronikeinheit basierend auf dem Vergleich zwischen Ist-Stromverlauf oder Ist-Ladungsmenge und Soll-Stromverläufen oder Soll-Ladungsmengen darauf rückschließt ob eine Schmelzsicherung durchgebrannt ist.

Erfindungsgemäß wird beim Schließen des Stromkreises zwischen Batteriesystem und Verbraucher zunächst die Kapazität des, bzw. der Verbraucher geladen. Um zu vermeiden, dass die Trenneinrichtung dabei mit einem zu hohen Strom belastet wird, wird der Stromkreis zunächst über die Vorladeschaltung geschlossen. Der Widerstand in der Vorladeschaltung begrenzt dabei den Strom. Der sich dabei in der Lastschaltung einstellende Stromverlauf ist abhängig vom Widerstand, von der Summenspannung der Zellen entsprechend ihrer Verschaltung, von der Kapazität des Verbrauchers, sowie von der vor dem Vorladevorgang an der Kapazität anliegenden Spannung. Sind der Lastschaltung mehrere Verbraucher parallel zugeordnet, so entspricht die für den Stromverlauf wirksame Kapazität der Summe der einzelnen Verbraucher-Kapazitäten. Sind all diese Größen bekannt, so kann der zu erwartende Stromverlauf vorab bestimmt und in der Elektronikeinheit hinterlegt werden. Da die für den Stromverlauf wirksame Kapazität sich ändert, wenn in einer Verbraucherschaltung die Schmelzsicherung durchgebrannt ist, kann durch Messung des in der Lastschaltung fließenden Stroms und Vergleich mit dem zu erwartenden Stromverlauf darauf rückgeschlossen werden, ob eine der Schmelzsicherungen durchgebrannt ist.

Anstatt dem Stromverlauf kann auch das zeitliche Integral des Stroms verwendet werden. Durch die Integralbildung des Stroms wird die beim Vorladevorgang umgesetzte Ladungsmenge bestimmt, welche einen diskreten Wert annimmt sobald die beim Vorladen wirksame Kapazität vollständig geladen ist. Die derart bestimmte Ist-Ladungsmenge kann mit einer zu erwartenden Soll-Ladungsmenge verglichen werden, wodurch ein Rückschluss auf eine durchgebrannte Schmelzsicherung ermöglicht wird. Der Vergleich zwischen Ist-Ladungsmenge und Soll-Ladungsmenge ist mit dem Vergleich zwischen Ist-Stromverlauf und Soll-Stromverlauf technisch gleichwertig. In der entsprechenden Datenverarbeitung in der Elektronikeinheit ist der Vergleich zweier diskreter Werte jedoch einfacher zu gestalten als der Vergleich zweier zeitlicher Verläufe.

Erfindungsgemäß stellt die Verbraucherschaltung während des Vorladevorgangs eine, bis auf konstruktiv bedingte geringfügige Widerstände und Induktivitäten, rein kapazitive Last dar. Üblicherweise ist dies beim Vorladevorgang der Fall. Wäre die Verbraucherschaltung aktiv, d.h. würde über den Verbraucher eine signifikante Spannung abfallen, so wäre ein zuverlässiger Rückschluss auf eine durchgebrannte Schmelzsicherung nicht möglich.

Gemäß der Erfindung ist die Kapazität vor Beginn des Vorladevorgangs weitgehend entladen. Üblicherweise ist dies vor Beginn eines ersten Vorladevorgangs der Fall, da die Hochspannungs-Kapazitäten in einem Fahrzeug in der Regel über zumindest eine Entladevorrichtung verfügen. Durch eine solche Entladevorrichtung wird die Kapazität eines Verbrauchers entladen, sobald der Verbraucher deaktiviert wird. Wäre die Kapazität vor Beginn des Vorladevorgangs vollständig oder fast vollständig geladen, so würde beim Vorladevorgang kein oder nur ein geringer Strom fließen. Ein verlässlicher Rückschluss auf eine durchgebrannte Schmelzsicherung wäre in diesem Fall nicht möglich. Ist die Kapazität vor Beginn des Vorladevorgangs jedoch etwa zur Hälfte oder weniger als zur Hälfte geladen, so ist ein zuverlässiger Rückschluss auf eine durchgebrannte Schmelzsicherung möglich ohne dass die zeitliche Auflösung der Erfassung des Stromsignals durch die Elektronikeinheit ungebührend erhöht werden müsste.

Weiterbildungen der Erfindung sind in den abhängigen Ansprüchen, der Beschreibung sowie den beigefügten Zeichnungen angegeben.

In der Elektronikeinheit sind mehrere Soll-Stromverläufe hinterlegt, die je einem bei einem Vorladevorgang in der Lastschaltung fließenden Strom entsprechen, wobei jeder hinterlegte Soll-Stromverlauf für einen Stromverlauf mit zumindest einer durchgebrannten Schmelzsicherung charakteristisch ist. Weiters ist die Elektronikeinheit dazu eingerichtet, anhand eines Vergleichs zwischen Ist-Stromverlauf und den hinterlegten Soll-Stromverläufen rückzuschließen ob eine der Schmelzsicherungen durchgebrannt ist. Durch die Schaffung einer konkreten Vergleichsmöglichkeit zwischen dem Ist-Stromverlauf und konkreten Soll-Stromverläufen wird die Feststellung, dass tatsächlich eine Schmelzsicherung durchgebrannt ist, präzisiert. Andere Ursachen für einen vom Soll-Stromverlauf abweichenden Ist-Stromverlauf, beispielsweise verursacht von Störungen in einem der Verbraucher selbst, können so mit einer verbesserten Zuverlässigkeit ausgeschlossen werden.

Gemäß der Erfindung ist die Elektronikeinheit dazu eingerichtet, anhand eines Vergleichs zwischen Ist-Stromverlauf und den hinterlegten Soll-Stromverläufen rückzuschließen welche der Schmelzsicherungen durchgebrannt ist. Dementsprechend ist ein Fahrzeug mit einem erfindungsgemäßen Batteriesystem vorgesehen, wobei der ersten Verbraucherschaltung eine erste Verbraucherkapazität zugeordnet ist, und wobei der zweiten Verbraucherschaltung eine zweite Verbraucherkapazität zugeordnet ist, wobei die erste Verbraucherkapazität eine von der zweiten Verbraucherkapazität unterschiedlich große Kapazität aufweist. Durch die unterschiedlichen Kapazitäten unterscheiden sich die Stromverläufe beim Vorladevorgang voneinander, je nachdem welche Schmelzsicherung durchgebrannt ist. Die Diagnose bei der Wartung des Batteriesystems wird durch die Unterscheidung, welche der Schmelzsicherungen durchgebrannt ist, besonders erleichtert.

Gemäß einer Ausführungsform der Erfindung ist an der ersten Verbraucherschaltung ein erster Umrichter anschließbar, der dazu eingerichtet ist einen vom Batteriesystem zur Verfügung gestellten in Wechselstrom umzurichten und diesen einem Antriebsmotor des Fahrzeugs zuzuführen. Die erste Verbraucherkapazität dient als Energie-Zwischenspeicher für die Schaltelemente des ersten Umrichters, und wird auch als Zwischenkreiskapazität bezeichnet. Damit die Spannung an den Schaltelementen während des Schaltvorgangs nicht einbricht, ist es vorteilhaft die Zwischenkreiskapazität mit möglichst geringer Impedanz und Induktivität an die Schaltelemente anzubinden. Daher ist die erste Verbraucherkapazität bevorzugt unmittelbar im ersten Umrichter angeordnet.

Erfindungsgemäß ist an der zweiten Verbraucherschaltung des Batteriesystems ein zweiter Umrichter anschließbar, der dazu eingerichtet ist die vom Batteriesystem zur Verfügung gestellte Spannung nach unten zu transformieren und einem Bordnetz des Fahrzeugs zuzuführen. Der für die Stützung des Bordnetzes erforderliche Strombedarf ist im Vergleich zum Strombedarf des Fahrzeug-Antriebsmotors deutlich geringer. Infolgedessen ist auch die zweite Verbraucherkapazität, die dem zweiten Umrichter als Zwischenkreiskapazität zugeordnet ist, üblicherweise geringer als die erste Verbraucherkapazität.

Gemäß einer weiteren Ausgestaltung der Erfindung weist das Fahrzeug mit dem erfindungsgemäßen Batteriesystem eine dritte Verbraucherschaltung auf, welche parallel zur ersten und zweiten Verbraucherschaltung angeordnet ist und mit der Lastschaltung verbunden ist, und wobei der dritten Verbraucherschaltung zumindest eine Schmelzsicherung zugeordnet ist, wobei an der dritten Verbraucherschaltung ein Ladegerät anschließbar ist, das dazu eingerichtet ist die Zellen durch eine außerhalb des Fahrzeugs befindliche Energiequelle zu laden.

Gemäß der Erfindung charakterisieren die auf der Elektronikeinheit hinterlegten Soll-Stromverläufe je einen bei einem Vorladevorgang fließenden Stromverlauf mit zumindest einer durchgebrannten Schmelzsicherung. Durch diese Charakterisierung ist eine Zuordnung des durch den Stromsensor ermittelten Ist-Stromverlaufs zu den auf der Elektronikeinheit hinterlegten Soll-Stromverläufen, und damit eine Erkennung ob eine Schmelzsicherung durchgebrannt ist, besonders einfach möglich.

Erfindungsgemäß schließt die Elektronikeinheit anhand des Vergleichs zwischen Ist-Stromverlauf und Soll-Stromverlauf darauf zurück, ob die Schmelzsicherung der ersten Verbraucherschaltung oder die Schmelzsicherung der zweiten Verbraucherschaltung durchgebrannt ist. Die Diagnose bei der Wartung des Batteriesystems wird durch die Unterscheidung, welche der Schmelzsicherungen durchgebrannt ist, besonders erleichtert.

Die Erfindung wird im Folgenden beispielhaft unter Bezugnahme auf die Zeichnungen beschrieben.
- Fig. 1: zeigt eine schematische Darstellung eines Fahrzeugs mit einem Batteriesystem
- Fig. 2: zeigt zeitliche Verläufe von bei einem Vorladevorgang umgesetzten Soll-Ladungsmengen, sowie den Verlauf einer Ist-Ladungsmenge
- Fig. 3: zeigt zeitliche Soll-Stromverläufe sowie den zeitlichen Ist-Stromverlauf bei einem Vorladevorgang

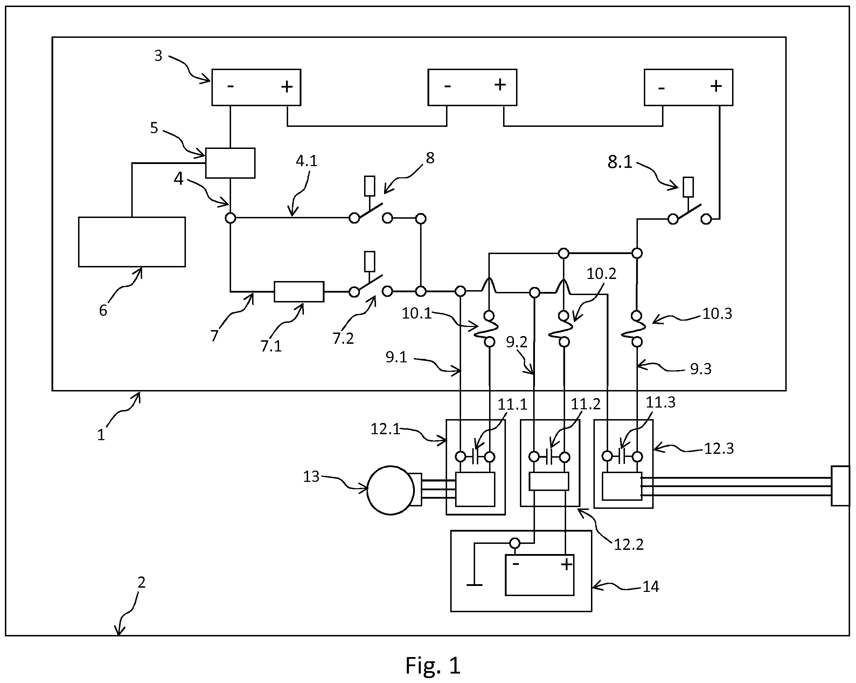

Fig. 1 zeigt eine schematische Darstellung eines Fahrzeugs 2 mit einem Batteriesystem 1. Eine Vielzahl von Zellen 3 sind mit in Serie miteinander elektrisch leitend verbunden. Die Summenspannung der Zellen 3 liegt an einer Lastschaltung 4 an. Eine erste Verbraucherschaltung 9.1 weist eine Schmelzsicherung 10.1 auf und ist mit der Lastschaltung 4 verbunden. Eine zweite Verbraucherschaltung 9.2 weist eine Schmelzsicherung 10.2 auf, und ist ebenfalls mit der Lastschaltung 4 verbunden. Die erste Verbraucherschaltung 9.1 und die zweite Verbraucherschaltung 9.2 sind parallel zueinander angeordnet. Eine dritte Verbraucherschaltung 9.3 weist eine Schmelzsicherung 10.3 auf, ist mit der Lastschaltung 4 verbunden und parallel zur ersten und zweiten Verbraucherschaltung 9.1, 9.2 angeordnet. In der Lastschaltung 4 ist ein Stromsensor 5 angeordnet, der dazu eingerichtet ist den in der Lastschaltung 4 fließenden Strom zu erfassen. Eine Elektronikeinheit 6 ist dazu eingerichtet ist Signale des Stromsensors 5 auszuwerten. Die Lastschaltung 4 weist einen Abschnitt 4.1 auf, in der eine Trenneinrichtung 8 angeordnet ist, durch die die Lastschaltung 4 unterbrochen werden kann. Dieser Abschnitt 4.1 der Lastschaltung 4 ist durch eine Vorladeschaltung 7 überbrückbar. Die Vorladeschaltung 7 weist einen Widerstand 7.1 auf. Die Vorladeschaltung ist durch eine Vorladeschaltungs-Trenneinrichtung 7.2 unterbrechbar. Die Lastschaltung 4 kann optional auch eine zusätzliche Trenneinrichtung 8.1 aufweisen.

Der ersten Verbraucherschaltung 9.1 ist eine erste Verbraucherkapazität 11.1 zugeordnet. Die erste Verbraucherkapazität 11.1 ist Bestandteil eines ersten Umrichters 12.1, welcher dazu eingerichtet ist Gleichstrom des Batteriesystems 1 in Wechselstrom umzurichten und diesen einem Antriebsmotor 13 des Fahrzeugs 2 zuzuführen. Der zweiten Verbraucherschaltung 9.2 ist eine zweite Verbraucherkapazität 11.2. Die zweite Verbraucherkapazität 11.2 ist Bestandteil eines zweiten Umrichters, der dazu eingerichtet ist die vom Batteriesystem (1) zur Verfügung gestellte Spannung nach unten zu transformieren und einem Bordnetz 14 des Fahrzeugs (2) zuzuführen. Der dritten Verbraucherschaltung 9.3 ist eine dritte Verbraucherkapazität 11.3 zugeordnet. Die dritte Verbraucherkapazität 11.3 ist einem Ladegerät 12.3 zugeordnet. Das Ladegerät 12.3 ist dazu eingerichtet ist die Zellen 3 durch eine außerhalb des Fahrzeugs 2 befindliche Energiequelle zu laden.

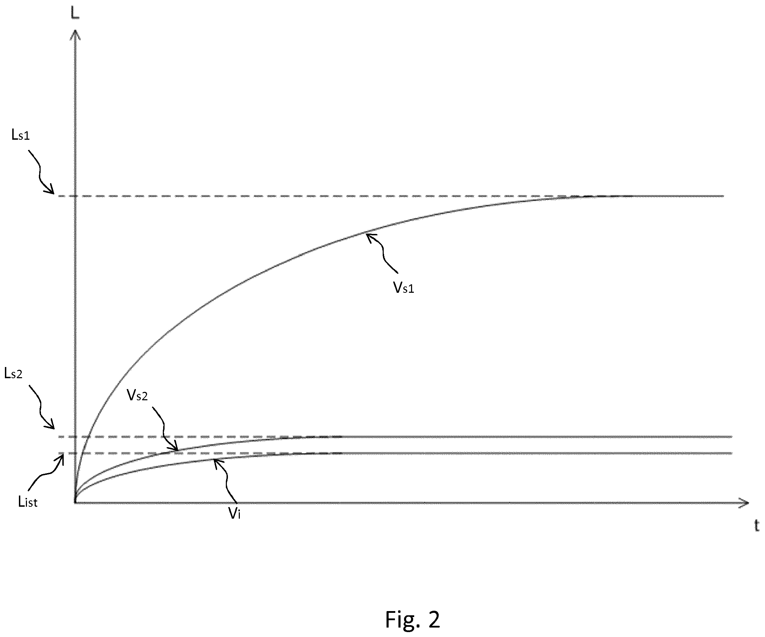

In Fig. 2 sind schematisch mehrere Verläufe der bei einem Vorladevorgang umgesetzten Ladungsmenge L über die Zeit t dargestellt. Vₛ₁ entspricht einem ersten zeitlichen Verlauf der bei einem Vorladevorgang umgesetzten Ladungsmenge L, bei dem alle Verbraucherkapazitäten 11.1, 11.2, 11.3 wirksam sind. Bei diesem ersten zeitlichen Verlauf Vₛ₁ sind demnach alle Schmelzsicherungen 10.1, 10.2, 10.3 der Verbrauchschaltungen 9.1, 9.2, 9.3 intakt. Sind alle Verbraucherkapazitäten 11.1, 11.2, 11.3 vollständig geladen, so nimmt die erste dabei umgesetzte Soll-Ladungsmenge den Wert Lₛ₁ an. Vₛ₂ entspricht einem zweiten zeitlichen Verlauf der bei einem Vorladevorgang umgesetzten Ladungsmenge L, bei dem lediglich die zweite und dritte Verbraucherkapazität 11.2, 11.3 wirksam sind. Die erste Verbraucherkapazität 11.1 ist nicht wirksam, was darauf rückschließen lässt dass die Schmelzsicherung der ersten Verbraucherschaltung 10.1 durchgebrannt ist. Die beim zweiten zeitlichen Verlauf Vₛ₂ zweite umgesetzte Soll-Ladungsmenge nimmt den Wert Lₛ₂ an, welcher deutlich niedriger als der Wert Lₛ₁ ist, da die erste Verbraucherkapazität 11.1 eine geringere Kapazität aufweist als die zweite und dritte Verbraucherkapazität 11.2, 11.3 zusammen. Die Werte der ersten und zweiten Soll-Ladungsmengen Lₛ₁ und Lₛ₂ sind in der Elektronikeinheit 6 hinterlegt.

Vᵢ entspricht dem zeitlichen Verlauf der bei einem Vorladevorgang umgesetzten Ist-Ladungsmenge, wie sie von der Elektronikeinheit 6 basierend auf den Signalen von Stromsensor 5 ermittelt wird. Die bei diesem Vorladevorgang umgesetzte Ist-Ladungsmenge nimmt den Wert Lᵢ an. Der Wert der gemessenen Ladungsmenge Lᵢ wird mit den Werten der ersten und zweiten Soll-Ladungsmengen Lₛ₁ und Lₛ₂ verglichen, die auf der Elektronikeinheit 6 hinterlegt sind. Unterschreitet der Betrag der Differenz zwischen der Ist-Ladungsmenge Lᵢ und der ersten oder der zweiten Soll-Ladungsmenge Lₛ₁, Lₛ₂ einen Grenzwert, so kann zuverlässig darauf rückgeschlossen werden, dass die der ersten Verbraucherschaltung 9.1 zugeordnete Schmelzsicherung 10.1 durchgebrannt ist.

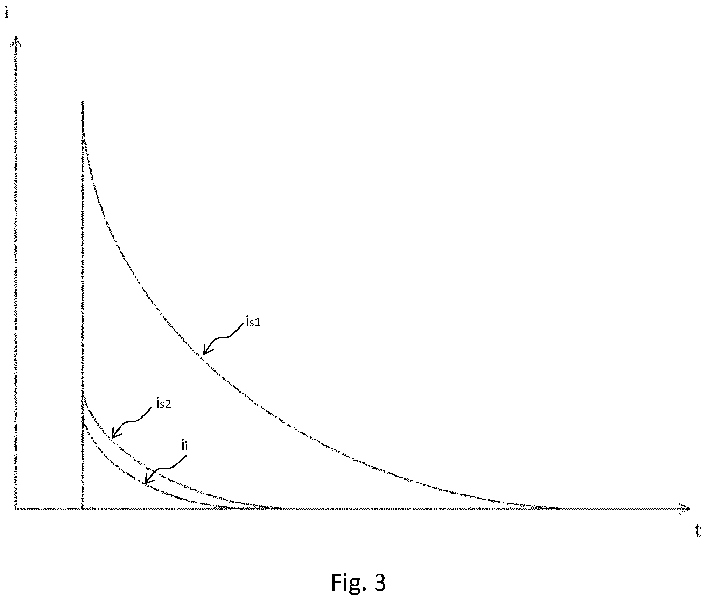

In Fig. 3 sind schematisch mehrere Verläufe des in der Lastschaltung 4 fließenden Stroms i über die Zeit t dargestellt, wie sie bei einem Vorladevorgang auftreten. iₛ₁ entspricht einem ersten Soll-Stromverlauf des bei einem Vorladevorgang in der Lastschaltung 4 fließenden Stroms, bei dem alle Verbraucherkapazitäten 11.1, 11.2, 11.3 wirksam sind. Bei diesem ersten Stromverlauf iₛ₁ sind demnach alle Schmelzsicherungen 10.1, 10.2, 10.3 der Verbrauchschaltungen 9.1, 9.2, 9.3 intakt. iₛ₂ entspricht einem zweiten Soll-Stromverlauf des bei einem Vorladevorgang in der Lastschaltung 4 fließenden Stroms, bei dem lediglich die zweite und dritte Verbraucherkapazität 11.2, 11.3 wirksam sind. Die erste Verbraucherkapazität 11.1 ist nicht wirksam, was darauf rückschließen lässt dass die der ersten Verbraucherschaltung 9.1 zugeordnete Schmelzsicherung 10.1 durchgebrannt ist. Der erste und zweite Soll-Stromverlauf iₛ₁ und iₛ₂ sind in der Elektronikeinheit 6 hinterlegt.

iᵢ entspricht einem Ist-Stromverlauf des bei einem Vorladevorgang in der Lastschaltung 4 fließenden Stroms, wie er vom Stromsensor 5 ermittelt wird. Der Ist-Stromverlauf iᵢ wird durch die Elektronikeinheit 6 mit den darauf hinterlegten Soll-Stromverläufen iₛ₁ und iₛ₂ durch geeignete Fensterfunktionen verglichen. Wird dabei erkannt, dass der Ist-Stromverlauf iᵢ weitgehend dem Soll-Stromverlauf iₛ₂ entspricht, kann zuverlässig darauf rückgeschlossen werden, dass die der ersten Verbraucherschaltung 9.1 zugeordnete Schmelzsicherung 10.1 durchgebrannt ist.

### Bezugszeichenliste

- 1: Batteriesystem
- 2: Fahrzeug
- 3: Zelle
- 4: Lastschaltung
- 4.1: Abschnitt der Lastschaltung
- 5: Stromsensor
- 6: Elektronikeinheit
- 7: Vorladeschaltung
- 7.1: Widerstand
- 7.2: Vorladeschaltungs-Trenneinrichtung
- 8: Trenneinrichtung
- 8.1: Zusätzliche Trenneinrichtung
- 9.1: Erste Verbraucherschaltung
- 9.2: Zweite Verbraucherschaltung
- 9.3: Dritte Verbraucherschaltung
- 10.1: Schmelzsicherung der ersten Verbraucherschaltung
- 10.2: Schmelzsicherung der zweiten Verbraucherschaltung
- 10.3: Schmelzsicherung der dritten Verbraucherschaltung
- 11.1: Erste Verbraucherkapazität
- 11.2: Zweite Verbraucherkapazität
- 11.3: Dritte Verbraucherkapazität
- 12.1: Erster Umrichter
- 12.2: Zweiter Umrichter
- 12.3: Dritter Umrichter
- 13: Antriebsmotor
- 14: Bordnetz

- Vₛ₁: Erster zeitlicher Verlauf einer Soll-Ladungsmenge
- Vₛ₂: Zweiter zeitlicher Verlauf einer Soll-Ladungsmenge
- Vᵢ: Zeitlicher Verlauf einer Ist-Ladungsmenge
- L: Ladungsmenge
- Lₛ₁: Erste Soll-Ladungsmenge
- Lₛ₂: Zweite Soll-Ladungsmenge
- Lᵢ: Ist-Ladungsmenge
- iₛ₁: Erster Soll-Stromverlauf
- iₛ₂: Zweiter Soll-Stromverlauf
- iᵢ: Ist-Stromverlauf
- t: Zeit

## Patentansprüche

1. Schaltungsanordnung zum Erkennen des Durchbrennens von Schmelzsicherungen (10.1,10.2,10.3) in einem Batteriesystem (1) eines Fahrzeugs (2), umfassend eine Vielzahl von Zellen (3), eine Lastschaltung (4) an der die Spannung der Zellen (3) anliegt, einen Stromsensor (5) der dazu eingerichtet ist den in der Lastschaltung (4) fließenden Strom zu erfassen, eine Elektronikeinheit (6) die dazu eingerichtet ist Signale des Stromsensors (5) auszuwerten, eine der Lastschaltung (4) zuschaltbare Vorladeschaltung (7) die dazu eingerichtet ist den durch die Lastschaltung (4) fließenden Strom mittels eines Widerstands (7.1) zu begrenzen, eine Trennvorrichtung (8) in einem Abschnitt (4.1) der Lastschaltung (4), wobei dieser Abschnitt (4.1) durch die Vorladeschaltung (7) überbrückbar ist, eine erste Verbraucherschaltung (9.1) und zumindest eine zweite Verbraucherschaltung (9.2), die parallel zueinander angeordnet und mit der Lastschaltung (4) verbunden sind, wobei jeder Verbraucherschaltung (9.1, 9.2, 9.3) zumindest eine Schmelzsicherung (10.1, 10.2, 10.3) zugeordnet ist,
**dadurch gekennzeichnet, dass** in der Elektronikeinheit (6) mehrere Soll-Stromverläufe (iₛ₁, iₛ₂) oder Soll-Ladungsmengen (Lₛ₁, Lₛ₂) hinterlegt sind, die je einem bei einem Vorladevorgang in der Lastschaltung (4) fließenden Strom oder der bei einem Vorladevorgang umgesetzten Ladungsmenge entsprechen, wobei jeder hinterlegte Soll-Stromverlauf (iₛ₁, iₛ₂) oder Soll-Ladungsmenge (Lₛ₁, Lₛ₂) für einen Stromverlauf oder umgesetzten Ladungsmenge mit zumindest einer durchgebrannten Schmelzsicherung (10.1, 10.2, 10.3) charakteristisch ist, und
die Elektronikeinheit (6) dazu eingerichtet ist, anhand eines Vergleichs zwischen Ist-Stromverlauf (iᵢ) oder Ist-Ladungsmenge (Lᵢ) und den hinterlegten Soll-Stromverläufen (iₛ₁, iₛ₂) oder Soll-Ladungsmengen (Lₛ₁, Lₛ₂) durch geeignete Fensterfunktionen rückzuschließen ob eine der Schmelzsicherungen (10.1, 10.2, 10.3) durchgebrannt ist und welche der Schmelzsicherungen (10.1, 10.2, 10.3) durchgebrannt ist.

2. Schaltungsanordnung nach Anspruch 1, **dadurch gekennzeichnet, dass** der ersten Verbraucherschaltung (9.1) eine erste Verbraucherkapazität (11.1) zugeordnet ist, und der zweiten Verbraucherschaltung (9.2) eine zweite Verbraucherkapazität (11.2) zugeordnet ist, wobei die erste Verbraucherkapazität (11.1) eine von der zweiten Verbraucherkapazität (11.2) unterschiedlich große Kapazität aufweist.

3. Schaltungsanordnung nach Anspruch 1 oder 2,
**dadurch gekennzeichnet, dass** an der ersten Verbraucherschaltung (9.1) ein erster Umrichter (12.1) anschließbar ist, der dazu eingerichtet ist einen vom Batteriesystem (1) zur Verfügung gestellten Gleichstrom in Wechselstrom umzurichten und diesen einem Antriebsmotor (13) des Fahrzeugs (2) zuzuführen.

4. Schaltungsanordnung nach einem der vorhergehenden Ansprüche,
**dadurch gekennzeichnet, dass** an der zweiten Verbraucherschaltung (9.2) ein zweiter Umrichter (12.2) anschließbar ist, der dazu eingerichtet ist die vom Batteriesystem (1) zur Verfügung gestellte Spannung nach unten zu transformieren und einem Bordnetz (14) des Fahrzeugs (2) zuzuführen.

5. Schaltungsanordnung nach einem der vorhergehenden Ansprüche, **dadurch gekennzeichnet, dass** das Batteriesystem (1) eine dritte Verbraucherschaltung (9.3) aufweist, welche parallel zur ersten und zweiten Verbraucherschaltung (9.1, 9,2) angeordnet ist und mit der Lastschaltung (4) verbunden ist, wobei der dritten Verbraucherschaltung (9.3) zumindest eine Schmelzsicherung (10.3) zugeordnet ist, und wobei an der dritten Verbraucherschaltung (9.3) ein Ladegerät (12.3) anschließbar ist, das dazu eingerichtet ist die Zellen (3) durch eine außerhalb des Fahrzeugs (2) befindliche Energiequelle zu laden.

6. Verfahren zum Erkennen des Durchbrennens von Schmelzsicherungen in einem Batteriesystem (1) eines Fahrzeugs (2), umfassend eine Vielzahl von Zellen (3), eine Lastschaltung (4) an der die Spannung der Zellen anliegt, einen Stromsensor (5) der der dazu eingerichtet ist den in der Lastschaltung (4) fließenden Strom zu erfassen, eine Elektronikeinheit (6) die dazu eingerichtet ist Signale des Stromsensors (5) auszuwerten, eine der Lastschaltung (4) zuschaltbare Vorladeschaltung (7) die dazu eingerichtet ist den durch die Lastschaltung (4) fließenden Strom mittels eines Widerstands (7.1) zu begrenzen, eine Trennvorrichtung (8) in einem Abschnitt der Lastschaltung (4), wobei dieser Abschnitt durch die Vorladeschaltung (7) überbrückbar ist, eine erste Verbraucherschaltung (9.1) und zumindest eine zweite Verbraucherschaltung (9.2), die parallel zueinander angeordnet und mit der Lastschaltung (4) verbunden sind, wobei jeder Verbraucherschaltung (9.1, 9.2, 9.3) zumindest eine Schmelzsicherung (10.1, 10.2, 10.3) zugeordnet ist, **dadurch gekennzeichnet, dass** die Elektronikeinheit (6) den Ist-Stromverlauf (iᵢ) des in der Lastschaltung (4) bei einem Vorladevorgang fließenden Stroms, oder die Ist-Ladungsmenge (Lᵢ) die bei einem Vorladevorgang durch den in der Lastschaltung (4) fließenden Strom umgesetzt wird, erfasst und mit mehreren auf der Elektronikeinheit (6) hinterlegten Soll-Stromverläufen (iₛ₁, iₛ₂) oder Soll-Ladungsmengen (Lₛ₁, Lₛ₂) vergleicht, die je einem bei einem Vorladevorgang in der Lastschaltung (4) fließenden Strom entsprechen oder der bei einem Vorladevorgang umgesetzten Ladungsmenge entsprechen, und dass die Elektronikeinheit (6) basierend auf dem Vergleich zwischen Ist-Stromverlauf (iᵢ) oder Ist-Ladungsmenge (Lᵢ) und Soll-Stromverläufen (iₛ₁, iₛ₂) oder Soll-Ladungsmengen (Lₛ₁, Lₛ₂) durch geeignete Fensterfunktionen darauf rückschließt ob die Schmelzsicherung (10.1) der ersten Verbraucherschaltung (9.1) oder die Schmelzsicherung (10.2) der zweiten Verbraucherschaltung (9.2) durchgebrannt ist, wobei
die auf der Elektronikeinheit (6) hinterlegten Soll-Stromverläufe (iₛ₁, iₛ₂) je einen bei einem Vorladevorgang fließenden Stromverlauf mit zumindest einer durchgebrannten Schmelzsicherung (10.1, 10.2, 10.3) charakterisieren und
die auf der Elektronikeinheit (6) hinterlegten Soll-Ladungsmengen (Lₛ₁, Lₛ₂) je einen bei einem Vorladevorgang umgesetzten Strom mit zumindest einer durchgebrannten Schmelzsicherung (10.1, 10.2, 10.3) charakterisieren.

## Claims

1. Circuit arrangement for detecting the blowing of fuses (10.1, 10.2, 10.3) in a battery system (1) of a vehicle (2), comprising a plurality of cells (3), a load circuit (4) to which the voltage of the cells (3) is applied, a current sensor (5) which is configured to detect the current flowing in the load circuit (4), an electronics unit (6) which is configured to evaluate signals of the current sensor (5), a pre-charging circuit (7) connectable to the load circuit (4) and configured to limit the current flowing through the load circuit (4) by means of a resistor (7.1), a disconnecting device (8) in a section (4.1) of the load circuit (4), wherein this section (4.1) may be bridged by the pre-charging circuit (7), a first consumer circuit (9.1) and at least one second consumer circuit (9.2) which are disposed in parallel to each other and are connected to the load circuit (4), wherein at least one fuse (10.1, 10.2, 10.3) is assigned to each consumer circuit (9.1, 9.2, 9.3),
**characterized in that**, in the electronics unit (6), a plurality of setpoint current profiles (iₛ₁, iₛ₂) or setpoint charge quantities (Lₛ₁, Lₛ₂) are stored which each correspond to a current flowing in the load circuit (4) during a pre-charging operation or to a charge quantity converted during a pre-charging operation, wherein each stored setpoint current profile (iₛ₁, iₛ₂) or setpoint charge quantity (Lₛ₁, Lₛ₂) is characteristic of a current profile or converted charge quantity with at least one blown fuse (10.1, 10.2, 10.3), and
the electronics unit (6) is configured to deduce whether one of the fuses (10.1, 10.2, 10.3) has blown, and which of the fuses (10.1, 10.2, 10.3) has blown, based on a comparison between the actual current profile (iᵢ) or the actual charge quantity (Lᵢ) and the stored setpoint current profiles (iₛ₁, iₛ₂) or setpoint charge quantities (Lₛ₁, Lₛ₂) by way of suitable window functions.

2. Circuit arrangement according to claim 1,
**characterized in that** a first consumer capacitance (11.1) is assigned to the first consumer circuit (9.1), and a second consumer capacitance (11.2) is assigned to the second consumer circuit (9.2),
wherein the first consumer capacitance (11.1) has a capacitance which differs in magnitude from the second consumer capacitance (11.2).

3. Circuit arrangement according to claim 1 or 2,
**characterized in that** a first converter (12.1) configured to convert direct current provided by the battery system (1) into alternating current and to supply the alternating current to a drive motor (13) of the vehicle (2) is connectable to the first consumer capacitance (9.1).

4. Circuit arrangement according to one of the preceding claims,
**characterized in that** a second converter (12.2) configured to step down the voltage provided by the battery system (1) and to supply it to an electrical system (14) of the vehicle (2) is connectable to the second consumer circuit (9.2).

5. Circuit arrangement according to one of the preceding claims,
**characterized in that** the battery system (1) comprises a third consumer circuit (9.3) which is arranged in parallel to the first and second consumer circuits (9.1, 9.2) and connected to the load circuit (4), wherein at least one fuse (10.3) is assigned to the third consumer circuit (9.3), and
wherein a charging device (12.3) configured to charge the cells (3) by means of an energy source located outside the vehicle (2) is connectable to the third consumer circuit (9.3).

6. Method for detecting the blowing of fuses in a battery system (1) of a vehicle (2), comprising a plurality of cells (3), a load circuit (4) to which the voltage of the cells is applied, a current sensor (5) which is configured to detect the current flowing in the load circuit (4), an electronics unit (6) which is configured to evaluate signals of the current sensor (5), a pre-charging circuit (7) connectable to the load circuit (4) and configured to limit the current flowing through the load circuit (4) by means of a resistor (7.1), a disconnecting device (8) in a section of the load circuit (4), wherein this section may be bridged by the pre-charging circuit (7), a first consumer circuit (9.1) and at least one second consumer circuit (9.2) which are disposed in parallel to each other and are connected to the load circuit (4), wherein at least one fuse (10.1, 10.2, 10.3) is assigned to each consumer circuit (9.1, 9.2, 9.3),
**characterized in that** the electronics unit (6) detects the actual current profile (iᵢ) of the current flowing in the load circuit (4) during a pre-charging operation or the actual charge quantity (Lᵢ) converted by means of the current flowing in the load circuit (4) during a pre-charging operation and compares it to several setpoint current profiles (iₛ₁, iₛ₂) or setpoint charge quantities (Lₛ₁, Lₛ₂) stored on the electronics unit (6) which each correspond to a current flowing in the load circuit (4) during a pre-charging operation, or which each correspond to a charge quantity converted during a pre-charging operation, and that the electronics unit (6) deduces whether the fuse (10.1) of the first consumer circuit (9.1) or the fuse (10.2) of the second consumer circuit (9.2) has blown, based on the comparison between the actual current profile (iᵢ) or the actual charge quantity (Lᵢ) and setpoint current profiles (iₛ₁, iₛ₂) or setpoint charge quantities (Lₛ₁, Lₛ₂) by way of suitable window functions, wherein
the setpoint current profiles (iₛ₁, iₛ₂) stored on the electronics unit (6) each characterize a current profile flowing during a pre-charging operation with at least one blown fuse (10.1, 10.2, 10.3), and
the setpoint charge quantities (Lₛ₁, Lₛ₂) stored on the electronics unit (6) each characterize a current converted during a pre-charging operation with at least one blown fuse (10.1, 10.2, 10.3).

## Revendications

1. Circuit destiné à repérer la fusion de fusibles (10.1, 10.2, 10.3) dans un système de batterie (1) d'un véhicule (2), comprenant une pluralité d'éléments (3), un circuit de charge (4) contre lequel s'applique la tension des éléments (3), un capteur de courant (5) qui est conçu pour détecter le courant circulant dans le circuit de charge (4), une unité électronique (6) qui est conçue pour évaluer des signaux du capteur de courant (5), un circuit de pré-charge (7) qui peut être commuté au circuit de charge (4) et qui est conçu pour limiter le courant circulant à travers le circuit de charge (4) au moyen d'une résistance (7.1), un dispositif de séparation (8) dans une partie (4.1) du circuit de charge (4), cette partie (4.1) pouvant être court-circuitée par le circuit de pré-charge (7), un premier circuit consommateur (9.1) et au moins un deuxième circuit consommateur (9.2) qui sont agencés parallèlement l'un à l'autre et qui sont reliés au circuit de charge (4), au moins un fusible (10.1, 10.2, 10.3) étant associé à chaque circuit consommateur (9.1, 9.2, 9.3),
**caractérisé en ce que** plusieurs variations de courant théoriques (iₛ₁, iₛ₂) ou quantités de charge théoriques (Lₛ₁, Lₛ₂) sont mises en mémoire dans l'unité électronique (6), lesquelles correspondent respectivement à un courant circulant dans le circuit de charge (4) lors d'un processus de pré-charge ou à la quantité de charge convertie lors d'un processus de pré-charge, chaque variation de courant théorique (iₛ₁, iₛ₂) ou quantité de charge théorique (Lₛ₁, Lₛ₂) mise en mémoire étant caractéristique d'une variation de courant ou d'une quantité de charge convertie avec au moins un fusible (10.1, 10.2, 10.3) fondu, et
l'unité électronique (6) est conçue pour déduire, sur la base d'une comparaison entre la variation de courant réelle (iᵢ) ou la quantité de charge réelle (Lᵢ) et les variations de courant théoriques (iₛ₁, iₛ₂) ou les quantités de charge théoriques (Lₛ₁, Lₛ₂) mises en mémoire, par l'intermédiaire de fonctions de fenêtre appropriées, si l'un des fusibles (10.1, 10.2, 10.3) est fondu et lequel des fusibles (10.1, 10.2, 10.3) est fondu.

2. Circuit selon la revendication 1, **caractérisé en ce qu'**une première capacité de consommateur (11.1) est associée au premier circuit consommateur (9.1), et une deuxième capacité de consommateur (11.2) est associée au deuxième circuit consommateur (9.2),
dans lequel la première capacité de consommateur (11.1) présente une capacité de grandeur plus ou moins différente de celle de la deuxième capacité de consommateur (11.2).

3. Circuit selon la revendication 1 ou 2, **caractérisé en ce qu'**un premier convertisseur (12.1), qui est conçu pour convertir un courant continu fourni par le système de batterie (1) en courant alternatif et pour amener celui-ci à un moteur d'entraînement (13) du véhicule (2), peut être raccordé au premier circuit consommateur (9.1).

4. Circuit selon l'une quelconque des revendications précédentes, **caractérisé en ce qu'**un deuxième convertisseur (12.2), qui est conçu pour transformer la tension fournie par le système de batterie (1) en l'abaissant et pour l'amener à un réseau de bord (14) du véhicule (2), peut être raccordé au deuxième circuit consommateur (9.2).

5. Circuit selon l'une quelconque des revendications précédentes, **caractérisé en ce que** le système de batterie (1) présente un troisième circuit consommateur (9.3), lequel est agencé parallèlement au premier et au deuxième circuit consommateur (9.1, 9.2) et est relié au circuit de charge (4), au moins un fusible (10.3) étant associé au troisième circuit consommateur (9.3),
et
dans lequel un appareil de charge (12.3), qui est conçu pour charger les éléments (3) par l'intermédiaire d'une source d'énergie située à l'extérieur du véhicule (2), peut être raccordé au troisième circuit consommateur (9.3) .

6. Procédé pour repérer la fusion de fusibles dans un système de batterie (1) d'un véhicule (2), comprenant une pluralité d'éléments (3), un circuit de charge (4) contre lequel s'applique la tension des éléments, un capteur de courant (5) qui est conçu pour détecter le courant circulant dans le circuit de charge (4), une unité électronique (6) qui est conçue pour évaluer des signaux du capteur de courant (5), un circuit de pré-charge (7) qui peut être commuté au circuit de charge (4) et qui est conçu pour limiter le courant circulant à travers le circuit de charge (4) au moyen d'une résistance (7.1), un dispositif de séparation (8) dans une partie du circuit de charge (4), cette partie pouvant être court-circuitée par le circuit de pré-charge (7), un premier circuit consommateur (9.1) et au moins un deuxième circuit consommateur (9.2) qui sont agencés parallèlement l'un à l'autre et qui sont reliés au circuit de charge (4), au moins un fusible (10.1, 10.2, 10.3) étant associé à chaque circuit consommateur (9.1, 9.2, 9.3),
**caractérisé en ce que** l'unité électronique (6) détecte la variation de courant réelle (iᵢ) du courant circulant dans le circuit de charge (4) lors d'un processus de pré-charge, ou la quantité de charge réelle (Lᵢ) qui est convertie par l'intermédiaire du courant circulant dans le circuit de charge (4) lors d'un processus de pré-charge, et la compare à plusieurs variations de courant théoriques (iₛ₁, iₛ₂) ou quantités de charge théoriques (Lₛ₁, Lₛ₂) mises en mémoire sur l'unité électronique (6), lesquelles correspondent respectivement à un courant circulant dans le circuit de charge (4) lors d'un processus de pré-charge ou à la quantité de charge convertie lors d'un processus de pré-charge, et **en ce que** l'unité électronique (6) déduit, sur la base de la comparaison entre la variation de courant réelle (iᵢ) ou la quantité de charge réelle (Lᵢ) et les variations de courant théoriques (iₛ₁, iₛ₂) ou les quantités de charge théoriques (Lₛ₁, Lₛ₂), par l'intermédiaire de fonctions de fenêtre appropriées, si le fusible (10.1) du premier circuit consommateur (9.1) ou le fusible (10.2) du deuxième circuit consommateur (9.2) est fondu, où
les variations de courant théoriques (iₛ₁, iₛ₂) mises en mémoire sur l'unité électronique (6) caractérisent chacune une variation de courant circulant lors d'un processus de pré-charge avec au moins un fusible (10.1, 10.2, 10.3) fondu, et
les quantités de charge théoriques (Lₛ₁, Lₛ₂) mises en mémoire sur l'unité électronique (6) caractérisent chacune un courant converti lors d'un processus de pré-charge avec au moins un fusible (10.1, 10.2, 10.3) fondu.
